# EUROPEAN PATENT APPLICATION

(11) **EP 3 125 547 A1**
(43) Date of publication of application: **01.02.2017**
(21) Application number: 16157456.1
(22) Date of filing: 25.02.2016
(51) Int. Cl.: H04N 9/67, H04N 1/60, G09G 3/20

(54) **METHOD AND DEVICE FOR SWITCHING COLOR GAMUT MODE**

(30) Priority: 28.07.2015 CN 201510450942
(71) Applicant: Xiaomi Inc., Beijing 100085 (CN)
(72) Inventor: LI, Guosheng, Haidian District Beijing 100085 (CN); LIU, Anyu, Haidian District Beijing 100085 (CN); XIAO, Zhengdong, Haidian District Beijing 100085 (CN)
(74) Representative: Sadler, Peter Frederick

(57) **Abstract**

The disclosure relates to method and device for switching color gamut mode, the method comprising: acquiring (S100) a picture to be displayed; determining (S 101) a picture type to which the picture to be displayed belongs; acquiring (S102) a current color gamut mode currently adopted by a terminal, each color gamut mode having a picture type with which it matches; and if the picture type to which the picture to be displayed belongs does not match the current color gamut mode, switching (S103) the current color gamut mode to a color gamut mode which matches the picture type to which the picture to be displayed belongs. Embodiments of the disclosure realize switch of color gamut automatically, and meanwhile, adopt a matching color gamut mode based on a picture type to display a picture, enabling the displayed picture to possess colors desired for a user, which improves use experience of the user.

## Description

### TECHNICAL FIELD

The present disclosure generally relates to the field of communication technology, and more particularly, to a method and device for switching color gamut mode.

### BACKGROUND

Color gamut refers to the range and area constituted by the number of colors that can be expressed by a certain device, i.e., the color range that can be expressed by a variety of screen display equipment, printers or printing facilities. Presently, the color gamut of a screen of a mobile terminal such as a phone is becoming increasingly higher, some of which has a color coverage rate reaching, or even higher than, 100% of the color range formulated by National Television Standards Committee (NTSC).

However, the present standard color gamut of Internet transmission is standard Red Green Blue (sRGB), the color gamut of which is 70.8% of the color range formulated by NTSC, which is also the color gamut space of most images generated by still cameras or video cameras. Nevertheless, a user needs to acquire different display effects of a browsed picture according to different requirements. For example, when browsing clothes in online shops, a situation may occur in which colors of an image or photo of the clothes and the like are distorted; and if the color gamut mode is not switched, the user will see a picture whose colors are distorted. Therefore, different color gamut modes need to be determined according to different requirements of a user.

### SUMMARY

Embodiments of the present disclosure provide a method and a device for switching color gamut mode, so as to adopt different color gamut modes for different pictures.

In a first aspect of embodiments of the present disclosure, a method for switching color gamut mode is provided, the method comprising: acquiring a picture to be displayed; determining a picture type to which the picture to be displayed belongs; acquiring a current color gamut mode currently adopted by a terminal, each color gamut mode having a picture type with which it matches; and if the picture type to which the picture to be displayed belongs does not match the current color gamut mode, switching the current color gamut mode to a color gamut mode which matches the picture type to which the picture to be displayed belongs.

In an exemplary embodiment, determining a picture type to which the picture to be displayed belongs comprises: determining a picture type to which the picture to be displayed belongs according to frequency information of the picture to be displayed.

In an exemplary embodiment, determining a picture type to which the picture to be displayed belongs according to frequency information of the picture to be displayed comprises: making Fourier transformation to the picture to be displayed to acquire the frequency information; and determining a picture type to which the picture to be displayed belongs according to a relationship between the frequency information and a preset threshold, wherein the picture type includes a natural picture and a composite picture, the proportion of same frequency information in the natural picture is lower than the preset threshold, and the proportion of same frequency information in the composite picture is higher than the preset threshold.

In an exemplary embodiment, if the picture type to which the picture to be displayed belongs does not match the current color gamut mode, switching the current color gamut mode to a color gamut mode which matches the picture type to which the picture to be displayed belongs comprises: when the picture type to which the picture to be displayed belongs is a natural picture and the current color gamut mode is wide color gamut mode, determining that they do not match with each other and switching the wide color gamut mode to standard Red Green Blue (sRGB) mode which matches the picture type to which the picture to be displayed belongs; or when the picture type to which the picture to be displayed belongs is a composite picture and the current color gamut mode is sRGB mode, determining that they do not match with each other and switching the sRGB mode to wide color gamut mode which matches the picture type to which the picture to be displayed belongs.

In an exemplary embodiment, the method further comprises: after switching the wide color gamut mode to sRGB mode which matches the picture type to which the picture to be displayed belongs, if it is determined that the picture type to which the currently acquired picture to be displayed belongs is a composite picture, switching the sRGB mode back to the wide color gamut mode.

In an exemplary embodiment, the method further comprises: after switching the sRGB mode to wide color gamut mode which matches the picture type to which the picture to be displayed belongs, if it is determined that the picture type to which the currently acquired picture to be displayed belongs is a natural picture, switching the wide color gamut mode back to the sRGB mode.

In a second aspect of embodiments of the present disclosure, a device for switching color gamut mode is provided, the device comprising: a picture acquiring module configured to acquire a picture to be displayed; a determining module configured to determine a picture type to which the picture to be displayed which is acquired by the picture acquiring module belongs; a mode acquiring module configured to acquire a current color gamut mode currently adopted by a terminal, each color gamut mode having a picture type with which it matches; and a switching module configured to, if the picture type determined by the determining module to which the picture to be displayed belongs does not match the current color gamut mode acquired by the mode acquiring module, switch the current color gamut mode to a color gamut mode which matches the picture type to which the picture to be displayed belongs.

In an exemplary embodiment, the determining module is configured to: determine a picture type to which the picture to be displayed belongs according to frequency information of the picture to be displayed.

In an exemplary embodiment, the determining module comprises: a transforming sub-module configured to make Fourier transformation to the picture to be displayed to acquire the frequency information; and a determining sub-module configured to determine a picture type to which the picture to be displayed belongs according to a relationship between the frequency information acquired by the transforming sub-module and a preset threshold, wherein the picture type includes a natural picture and a composite picture, the proportion of same frequency information in the natural picture is lower than the preset threshold, and the proportion of same frequency information in the composite picture is higher than the preset threshold.

In an exemplary embodiment, the switching module comprises: a first switching sub-module configured to, when the picture type to which the picture to be displayed belongs is a natural picture and the current color gamut mode is wide color gamut mode, determine that they do not match with each other and switch the wide color gamut mode to standard Red Green Blue (sRGB) mode which matches the picture type to which the picture to be displayed belongs; or a second switching sub-module configured to, when the picture type to which the picture to be displayed belongs is a composite picture and the current color gamut mode is sRGB mode, determine that they do not match with each other and switch the sRGB mode to wide color gamut mode which matches the picture type to which the picture to be displayed belongs.

In an exemplary embodiment, the switching module further comprises: a third switching sub-module configured to, after the first switching sub-module switches the wide color gamut mode to sRGB mode which matches the picture type to which the picture to be displayed belongs, if it is determined that the picture type to which the currently acquired picture to be displayed belongs is a composite picture, switch the sRGB mode back to the wide color gamut mode.

In an exemplary embodiment, the switching module further comprises: a fourth switching sub-module configured to, after the second switching sub-module switches the sRGB mode to wide color gamut mode which matches the picture type to which the picture to be displayed belongs, if it is determined that the picture type to which the currently acquired picture to be displayed belongs is a natural picture, switch the wide color gamut mode back to the sRGB mode.

In a third aspect of embodiments of the present disclosure, a device for switching color gamut mode is provided, the device comprising: a processor; and a memory storing instructions executable by the processor, wherein the processor is configured to: acquire a picture to be displayed; determine a picture type to which the picture to be displayed belongs; acquire a current color gamut mode currently adopted by a terminal, each color gamut mode having a picture type with which it matches; and if the picture type to which the picture to be displayed belongs does not match the current color gamut mode, switch the current color gamut mode to a color gamut mode which matches the picture type to which the picture to be displayed belongs.

The technical solutions provided by embodiments of the present disclosure include the following advantageous effects: by acquiring a picture to be displayed, determining a picture type to which the picture to be displayed belongs, and switching a current color gamut mode to a color gamut mode which matches the picture type to which the picture to be displayed belongs when the picture type does not match the current color gamut mode, the whole switching procedure is implemented automatically, does not require a user to possess professional knowledge and is easy to realize; meanwhile, by adopting a matching color gamut mode based on a picture type to display a picture, the picture to be displayed has colors desired for a user, which improves use experience of the user.

It is to be understood that both the forgoing general description and the following detailed description are exemplary only, and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a method for switching color gamut mode shown according to an exemplary embodiment.
Fig. 2A is a schematic diagram of a composite photo shown according to an exemplary embodiment.
Fig. 2B is a schematic diagram of another composite photo shown according to an exemplary embodiment.
Fig. 3 is a scenario diagram of a method for switching color gamut mode shown according to an exemplary embodiment.
Fig. 4 is a flow chart of another method for switching color gamut mode shown according to an exemplary embodiment.
Fig. 5 is a flow chart of another method for switching color gamut mode shown according to an exemplary embodiment.
Fig. 6 is a flow chart of a further method for switching color gamut mode shown according to an exemplary embodiment.
Fig. 7 is a flow chart of still another method for switching color gamut mode shown according to an exemplary embodiment.
Fig. 8 is a block diagram of a device for switching color gamut mode shown according to an exemplary embodiment.
Fig. 9 is a block diagram of another device for switching color gamut mode shown according to an exemplary embodiment.
Fig. 10A is a block diagram of a further device for switching color gamut mode shown according to an exemplary embodiment.
Fig. 10B is a block diagram of a further device for switching color gamut mode shown according to an exemplary embodiment.
Fig. 11A is a block diagram of still another device for switching color gamut mode shown according to an exemplary embodiment.
Fig. 11B is a block diagram of still another device for switching color gamut mode shown according to an exemplary embodiment.
Fig. 12 is a block diagram applicable to a device for switching color gamut mode shown according to an exemplary embodiment.

### DETAILED DESCRIPTION

Reference will now be made in detail to exemplary embodiments, examples of which are illustrated in the accompanying drawings. The following description refers to the accompanying drawings in which same numbers in different drawings represent same or similar elements unless otherwise described. The implementations set forth in the following description of exemplary embodiments do not represent all implementations consistent with the invention. Instead, they are merely examples of apparatuses and methods consistent with aspects related to the invention as recited in the appended claims.

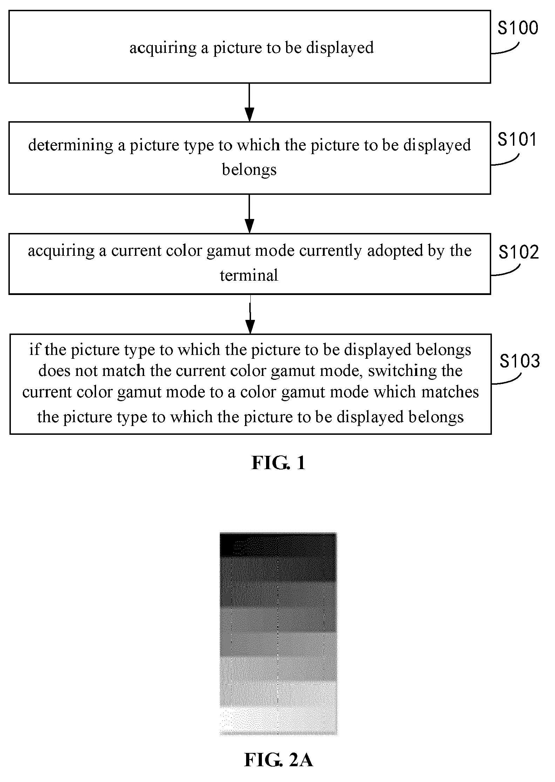

Fig. 1 is a flow chart of a method for switching color gamut mode shown according to an exemplary embodiment. As shown in Fig. 1, the method for switching color gamut mode may be applied to a terminal such as a phone, a tablet computer, etc. The embodiment may include the following steps S100-S103.

In step S100, a picture to be displayed may be acquired.

In the embodiment, a terminal may acquire a picture to be displayed from a server or locally. As one example, when a user clicks to view a certain piece of clothes in online shops, the terminal may acquire a picture of the clothes to be displayed returned by a server. As another example, when a user clicks to view a shot picture saved locally, the terminal may acquire the picture from a local album.

In step S101, a picture type to which the picture to be displayed belongs may be determined.

Wherein, the above picture type may include a natural picture and a composite picture.

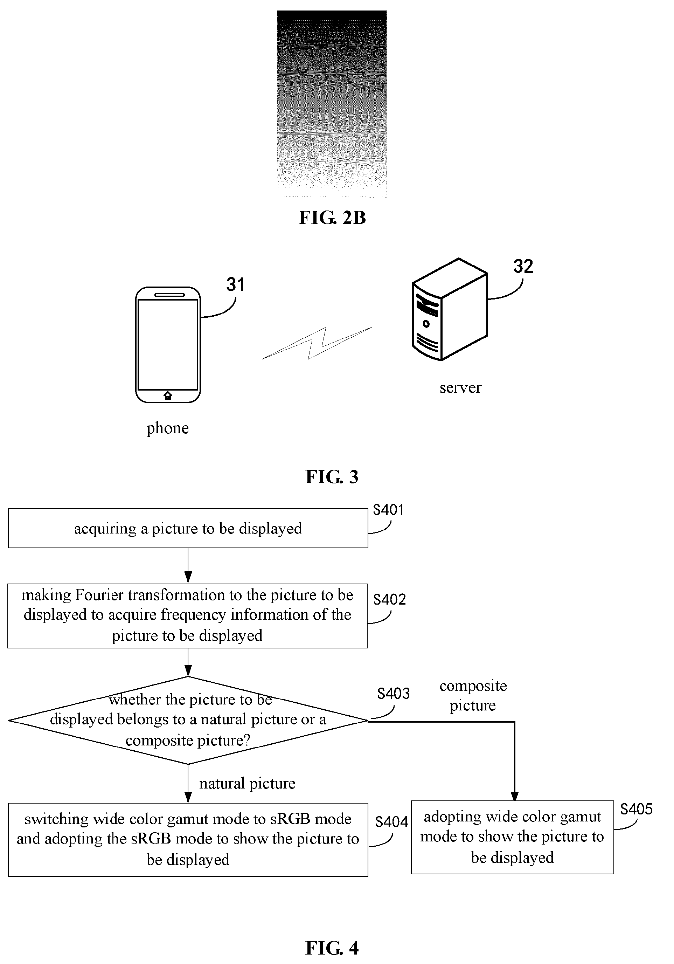

One characteristic of a natural picture is that grayscale values of data in the picture are irregular, while grayscale values of adjacent pixels in a composite picture all have relatively obvious features, such as a gradual change, jumps which are identical or have fixed sizes, etc. The pictures as shown in Figs. 2A-2B are composite photos, and their grayscale values of adjacent pixels have relatively obvious features.

Making Fourier transformation to a picture may transform a gray distribution function into a frequency distribution function of the picture. For a natural picture, frequency information obtained after Fourier transformation is random without obvious regularity, that is, the proportion of same frequency information is lower than a preset threshold. In contrast, among frequency information of a composite picture subjected to Fourier transformation, the proportion of same frequency information is higher than the preset threshold. Therefore, a picture type to which the picture to be displayed belongs may be determined according to frequency information of the picture to be displayed.

For example, Fourier transformation may be made to the picture to be displayed to acquire the frequency information thereof, and then whether the picture to be displayed is a natural picture or a composite picture may be determined based on a relationship between the frequency information and a preset threshold.

In step S102, a current color gamut mode currently adopted by the terminal may be acquired, each color gamut mode having a picture type with which it matches.

In the embodiment, the terminal may support both wide color gamut mode as well as sRGB mode. The present step needs to determine a current color gamut mode currently adopted by the terminal.

For wide color gamut mode, a matching picture type is a composite picture; for sRGB mode, a matching picture type is a natural picture.

In step S103, if the picture type to which the picture to be displayed belongs does not match the current color gamut mode, the current color gamut mode may be switched to a color gamut mode which matches the picture type to which the picture to be displayed belongs.

In the embodiment, the picture type to which the picture to be displayed belongs may be compared with the current color gamut mode; if they do not match with each other, the current color gamut mode may be switched to a color gamut mode which matches the picture type to which the picture to be displayed belongs; if they match with each other, there is no need to switch color gamut mode.

As one example, when the picture type is a natural picture and the current color gamut mode is wide color gamut mode, since the picture type does not match the current color gamut mode, the wide color gamut mode may be switched to sRGB mode.

As another example, when the picture type is a composite picture and the current color gamut mode is sRGB mode, since the picture type does not match the current color gamut mode, the sRGB mode may be switched to wide color gamut mode.

Below, the disclosure will be illustrated with reference to Fig. 3. As shown in Fig. 3, a user may browse clothes in an online shop such as Xiaomi mall with a phone 31 and click to enter a page of a certain piece of clothes when interested in the clothes. When the user clicks the clothes, the phone 31 may send a request to a server 32 of the online shop, which may return a page containing a picture of the clothes upon the request. After acquiring the picture of the clothes, the phone 31 may determine it as a natural picture and acquire that a color gamut mode currently adopted by the phone 31 is wide color gamut mode. Since a natural picture is a picture really existing in the natural world, it should be displayed as accurately as possible; that is to say, the user desires to see the clothes with no color distortion. Upon determining that the natural picture does not match the wide color gamut mode, the phone 31 may switch the wide color gamut mode to sRGB mode, and use the switched sRGB mode to display the picture of the clothes, at which time, the picture of the clothes displayed has no color distortion, and can provide the user with a basis for determining whether to purchase the clothes or not, which improves use experience of the user.

With the above embodiment of the method for switching color gamut mode, by acquiring a picture to be displayed, determining a picture type to which the picture to be displayed belongs, and switching a current color gamut mode to a color gamut mode which matches the picture type to which the picture to be displayed belongs when the picture type does not match the current color gamut mode, the whole switching procedure is implemented automatically, does not require a user to possess professional knowledge and is easy to realize; meanwhile, by adopting a matching color gamut mode based on a picture type to display a picture, the picture to be displayed has colors desired for a user, which improves use experience of the user.

Fig. 4 is a flow chart of another method for switching color gamut mode shown according to an exemplary embodiment. The method may be applied on a phone, the color gamut mode currently adopted by which is wide color gamut mode. As shown in Fig. 4, the method for switching color gamut mode may include the following steps.

In step S401, a picture to be displayed may be acquired.

In step S402, Fourier transformation may be made to the picture to be displayed to acquire frequency information of the picture to be displayed.

In step S403, whether the picture to be displayed belongs to a natural picture or a composite picture may be determined according to a relationship between the frequency information of the picture to be displayed and a preset threshold; if the picture belongs to a natural picture, step S404 may be performed; and if the picture belongs to a composite picture, step S405 may be performed.

In step S404, wide color gamut mode may be switched to sRGB mode and the sRGB mode may be adopted to show the picture to be displayed.

In step S405, the wide color gamut mode may be adopted to show the picture to be displayed.

The above embodiment of the method for switching color gamut mode makes Fourier transformation to a picture to be displayed to acquire frequency information of the picture to be displayed and determines a picture type to which the picture to be displayed belongs according to a relationship between frequency information of the picture to be displayed and a preset threshold, so as to make full use of characteristics of a natural picture and a composite picture to determine the picture type to which the picture to be displayed belongs, which is easy to realize and has high accuracy; and after determining the picture to be displayed as a natural picture, it switches wide color gamut mode to sRGB mode and adopts the sRGB mode to show the picture to be displayed, which enables the picture shown to possess accurate colors and improves a use feeling of a user.

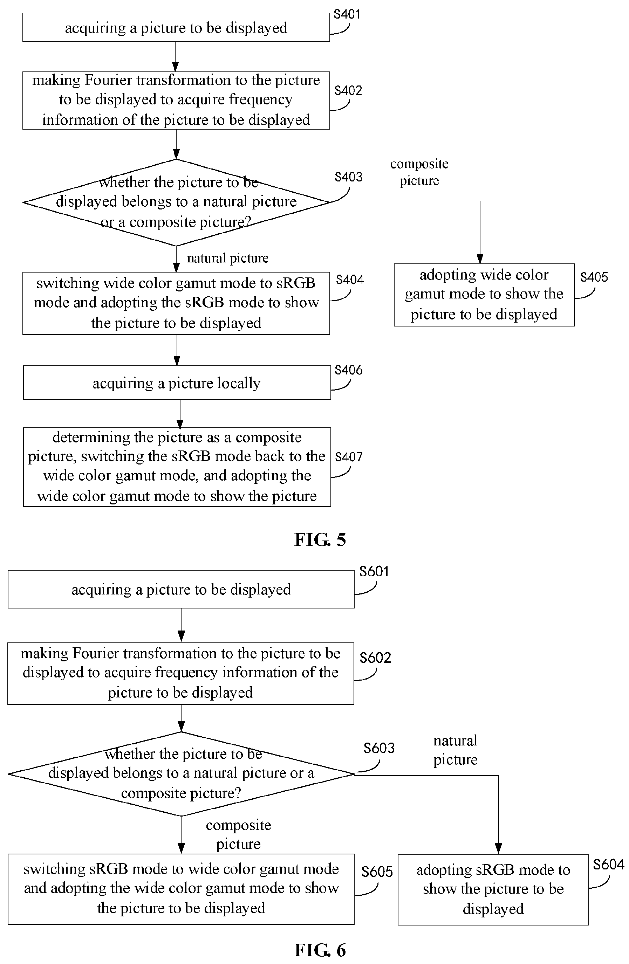

Fig. 5 is a flow chart of another method for switching color gamut mode shown according to an exemplary embodiment. As shown in Fig. 5, after step S404, the method may further include the following steps.

In step S406, a picture may be acquired locally.

In step S407, the picture may be determined as a composite picture, the sRGB mode may be switched back to the wide color gamut mode, and the wide color gamut mode may be adopted to show the picture.

The above embodiment of the method for switching color gamut mode switches sRGB mode back to wide color gamut mode and adopts the wide color gamut mode to show a picture after determining the picture as a composite picture, which enables the picture shown to possess vivid colors and improves a use feeling of a user.

Fig. 6 is a flow chart of a further method for switching color gamut mode shown according to an exemplary embodiment. The method may be applied on a phone, the color gamut mode currently adopted by which is sRGB mode. As shown in Fig. 6, the method for switching color gamut mode may include the following steps.

In step S601, a picture to be displayed may be acquired.

In step S602, Fourier transformation may be made to the picture to be displayed to acquire frequency information of the picture to be displayed.

In step S603, whether the picture to be displayed belongs to a natural picture or a composite picture may be determined according to a relationship between the frequency information of the picture to be displayed and a preset threshold; if the picture belongs to a natural picture, step S604 may be performed; and if the picture belongs to a composite picture, step S605 may be performed.

In step S604, sRGB mode may be adopted to show the picture to be displayed.

In step S605, the sRGB mode may be switched to wide color gamut mode and the wide color gamut mode may be adopted to show the picture to be displayed.

The above embodiment of the method for switching color gamut mode makes Fourier transformation to a picture to be displayed to acquire frequency information of the picture to be displayed and determines a picture type to which the picture to be displayed belongs according to a relationship between frequency information of the picture to be displayed and a preset threshold, so as to make full use of characteristics of a natural picture and a composite picture to determine the picture type to which the picture to be displayed belongs, which is easy to realize and has high accuracy; and after determining the picture to be displayed as a composite picture, it switches sRGB mode to wide color gamut mode and adopts the wide color gamut mode to show the picture to be displayed, which enables the picture shown to possess vivid colors and improves a use feeling of a user.

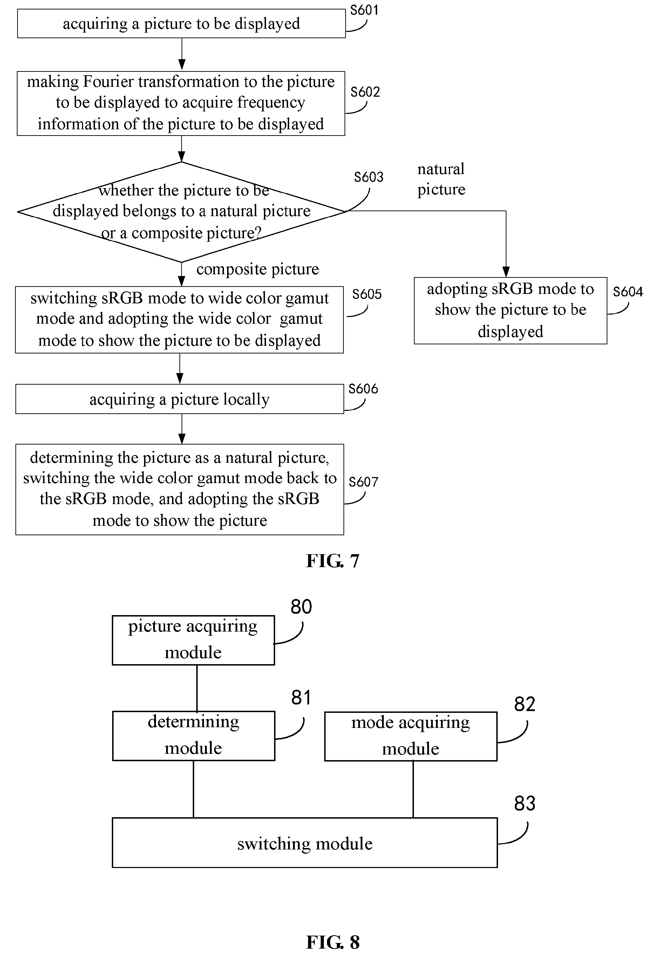

Fig. 7 is a flow chart of still another method for switching color gamut mode shown according to an exemplary embodiment. As shown in Fig. 7, after step S605, the method may further include the following steps.

In step S606, a picture may be acquired locally.

In step S607, the picture may be determined as a natural picture, the wide color gamut mode may be switched back to the sRGB mode, and the sRGB mode may be adopted to show the picture.

The above embodiment of the method for switching color gamut mode switches wide color gamut mode back to sRGB mode and adopts the sRGB mode to show a picture after determining the picture as a natural picture, which enables the picture shown to possess accurate colors and improves a use feeling of a user.

Corresponding to above embodiments of methods for switching color gamut mode, the disclosure further provides embodiments of devices for switching color gamut mode.

Fig. 8 is a block diagram of a device for switching color gamut mode shown according to an exemplary embodiment. As shown in Fig. 8, the device for switching color gamut mode may include a picture acquiring module 80, a determining module 81, a mode acquiring module 82 and a switching module 83.

The picture acquiring module 80 may be configured to acquire a picture to be displayed.

The determining module 81 may be configured to determine a picture type to which the picture to be displayed which is acquired by the picture acquiring module 80 belongs.

The mode acquiring module 82 may be configured to acquire a current color gamut mode currently adopted by a terminal, each color gamut mode having a picture type with which it matches.

The switching module 83 may be configured to, if the picture type determined by the determining module 81 to which the picture to be displayed belongs does not match the current color gamut mode acquired by the mode acquiring module 82, switch the current color gamut mode to a color gamut mode which matches the picture type to which the picture to be displayed belongs.

Wherein, the determining module 81 may be configured to: determine a picture type to which the picture to be displayed belongs according to frequency information of the picture to be displayed.

For the procedure in which the device for switching color gamut mode shown in Fig. 8 accomplishes color gamut switching, please refer to Fig. 1, which will not be detailed herein.

The above embodiment of the device for switching color gamut mode acquires, by an acquiring module, a picture to be displayed, determines, by a determining module, a picture type to which the picture to be displayed belongs, and switches, by a switching module, a current color gamut mode to a color gamut mode which matches the picture type to which the picture to be displayed belongs when the picture type does not match the current color gamut mode; the whole switching procedure is implemented automatically, does not require a user to possess professional knowledge and is easy to realize; meanwhile, by adopting a matching color gamut mode based on a picture type to display a picture, the picture to be displayed has colors desired for a user, which improves use experience of the user.

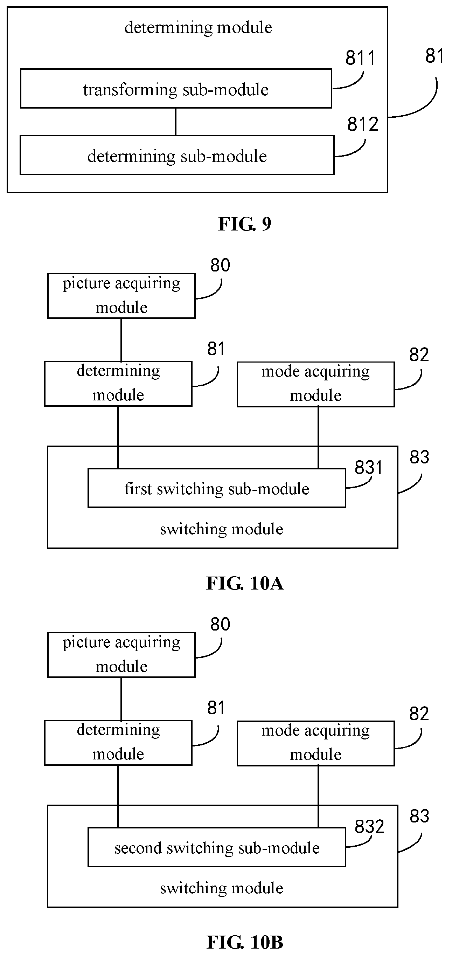

Fig. 9 is a block diagram of another device for switching color gamut mode shown according to an exemplary embodiment. As shown in Fig. 9, based on the embodiment shown in Fig. 8, the determining module 81 may include: a transforming sub-module 811 and a determining sub-module 812.

The transforming sub-module 811 may be configured to make Fourier transformation to the picture to be displayed to acquire the frequency information.

The determining sub-module 812 may be configured to determine a picture type to which the picture to be displayed belongs according to a relationship between the frequency information acquired by the transforming sub-module 811 and a preset threshold, wherein the picture type includes a natural picture and a composite picture, the proportion of same frequency information in a natural picture is lower than the preset threshold, and the proportion of same frequency information in a composite picture is higher than the preset threshold.

For the procedure in which the device for switching color gamut mode shown in Fig. 9 accomplishes color gamut switching, please refer to corresponding parts of Fig. 1, 4 or 6, which will not be detailed herein.

The above embodiment of the device for switching color gamut mode makes, by a transforming sub-module, Fourier transformation to a picture to be displayed to acquire frequency information of the picture to be displayed and determines, by a determining sub-module, a picture type to which the picture to be displayed belongs according to a relationship between frequency information of the picture to be displayed and a preset threshold, so as to make full use of characteristics of a natural picture and a composite picture to determine the picture type to which the picture to be displayed belongs, which is easy to realize and has high accuracy.

Fig. 10A is a block diagram of a further device for switching color gamut mode shown according to an exemplary embodiment. As shown in Fig. 10A, based on the embodiment shown in Fig. 8, the switching module 83 may include: a first switching sub-module 831.

The first switching sub-module 831 may be configured to, when the picture type to which the picture to be displayed belongs is a natural picture and the current color gamut mode is wide color gamut mode, determine that they do not match with each other and switch the wide color gamut mode to standard Red Green Blue (sRGB) mode which matches the picture type to which the picture to be displayed belongs.

For the procedure in which the device for switching color gamut mode shown in Fig. 10A accomplishes color gamut switching, please refer to corresponding parts of Fig. 1 or 4, which will not be detailed herein.

The above embodiment of the device for switching color gamut mode may switch wide color gamut mode back to sRGB mode and adopt the sRGB mode to show a picture to be displayed after determining the picture to be displayed as a natural picture, which enables the picture shown to possess accurate colors and improves a use feeling of a user.

Fig. 10B is a block diagram of a further device for switching color gamut mode shown according to an exemplary embodiment. As shown in Fig. 10B, based on the embodiment shown in Fig. 8, the switching module 83 may include: a second switching sub-module 832.

The second switching sub-module 832 may be configured to, when the picture type to which the picture to be displayed belongs is a composite picture and the current color gamut mode is sRGB mode, determine that they do not match with each other and switch the sRGB mode to wide color gamut mode which matches the picture type to which the picture to be displayed belongs.

For the procedure in which the device for switching color gamut mode shown in Fig. 10B accomplishes color gamut switching, please refer to corresponding parts of Fig. 1 or 6, which will not be detailed herein.

The above embodiment of the device for switching color gamut mode may switch sRGB mode back to wide color gamut mode and adopt the wide color gamut mode to show a picture to be displayed after determining the picture to be displayed as a composite picture, which enables the picture shown to possess vivid colors and improves a use feeling of a user.

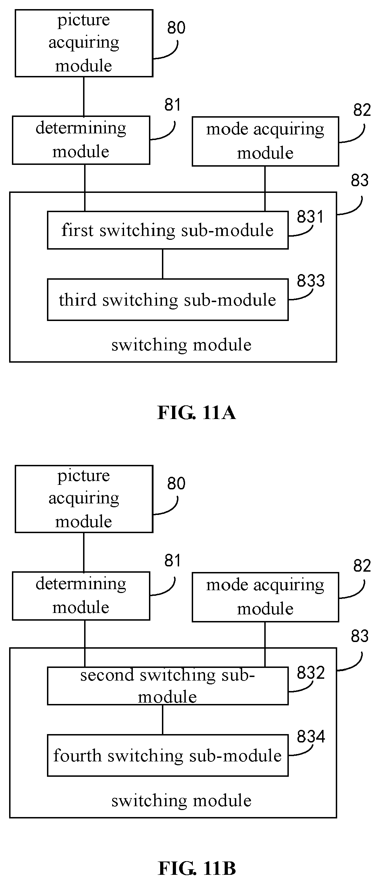

Fig. 11A is a block diagram of still another device for switching color gamut mode shown according to an exemplary embodiment. As shown in Fig. 11A, based on the embodiment shown in Fig. 10A, the switching module 83 may further include: a third switching sub-module 833.

The third switching sub-module 833 may be configured to, after the first switching sub-module 831 switches the wide color gamut mode to sRGB mode which matches the picture type to which the picture to be displayed belongs, if it is determined that the picture type to which the currently acquired picture to be displayed belongs is a composite picture, switch the sRGB mode back to the wide color gamut mode.

For the procedure in which the device for switching color gamut mode shown in Fig. 11A accomplishes color gamut switching, please refer to corresponding parts of Fig. 5, which will not be detailed herein.

The above embodiment of the device for switching color gamut mode may switch sRGB mode back to wide color gamut mode and adopt the wide color gamut mode to show a picture to be displayed after determining the picture to be displayed as a composite picture, which enables the picture shown to possess vivid colors and improves a use feeling of a user.

Fig. 11B is a block diagram of still another device for switching color gamut mode shown according to an exemplary embodiment. As shown in Fig. 11B, based on the embodiment shown in Fig. 10B, the switching module 83 may further include: a fourth switching sub-module 834.

The fourth switching sub-module 834 may be configured to, after the second switching sub-module 832 switches the sRGB mode to wide color gamut mode which matches the picture type to which the picture to be displayed belongs, if it is determined that the picture type to which the currently acquired picture to be displayed belongs is a natural picture, switch the wide color gamut mode back to the sRGB mode.

For the procedure in which the device for switching color gamut mode shown in Fig. 11B accomplishes color gamut switching, please refer to corresponding parts of Fig. 7, which will not be detailed herein.

The above embodiment of the device for switching color gamut mode may switch wide color gamut mode back to sRGB mode and adopt the sRGB mode to show a picture to be displayed after determining the picture to be displayed as a natural picture, which enables the picture shown to possess accurate colors.

With respect to the devices in above embodiments, specific manners in which respective modules and sub-modules perform operations have been described in detail in embodiments related to methods, which will not be elaborated herein.

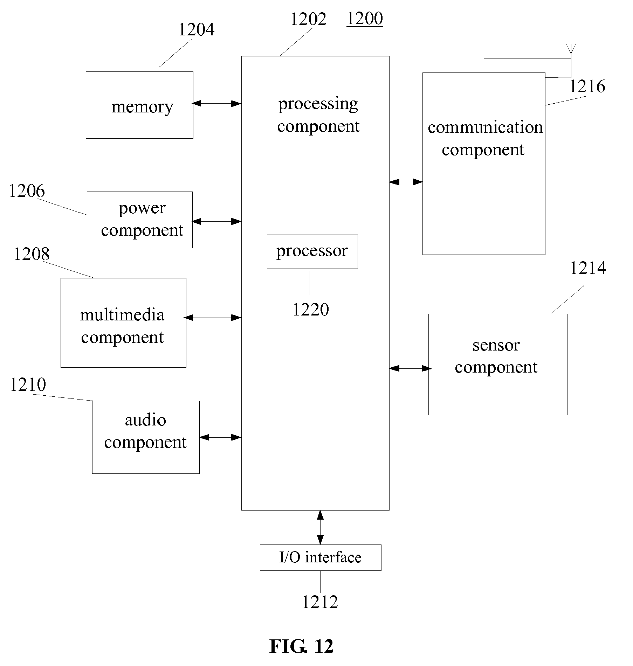

Fig. 12 is a block diagram applicable to a device for switching color gamut mode shown according to an exemplary embodiment. For example, device 1200 may be a mobile phone, a computer, a digital broadcast terminal, a messaging device, a gaming console, a tablet, a medical device, exercise equipment, a personal digital assistant, an aircraft and the like.

Referring to Fig. 12, the device 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 typically controls overall operations of the device 1200, such as the operations associated with display, telephone calls, data communications, camera operations, and recording operations. The processing component 1202 may include one or more processors 1220 to execute instructions to perform all or part of the steps in the above described methods. Moreover, the processing component 1202 may include one or more modules which facilitate the interaction between the processing component 1202 and other components. For instance, the processing component 1202 may include a multimedia module to facilitate the interaction between the multimedia component 1208 and the processing component 1202.

The memory 1204 is configured to store various types of data to support the operation of the device 1200. Examples of such data include instructions for any applications or methods operated on the device 1200, contact data, phonebook data, messages, pictures, video, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the device 1200. The power component 1206 may include a power management system, one or more power sources, and any other components associated with the generation, management, and distribution of power in the device 1200.

The multimedia component 1208 includes a screen providing an output interface between the device 1200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1208 includes a front camera and/or a rear camera. The front camera and the rear camera may receive an external multimedia datum while the device 1200 is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 includes a microphone ("MIC") configured to receive an external audio signal when the device 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as a keyboard, a click wheel, buttons, and the like. The buttons may include, but are not limited to, a home button, a volume button, a starting button, and a locking button.

The sensor component 1214 includes one or more sensors to provide status assessments of various aspects of the device 1200. For instance, the sensor component 1214 may detect an open/closed status of the device 1200, relative positioning of components, e.g., the display and the keypad, of the device 1200, a change in position of the device 1200 or a component of the device 1200, a presence or absence of user contact with the device 1200, an orientation or an acceleration/deceleration of the device 1200, and a change in temperature of the device 1200. The sensor component 1214 may include a proximity sensor configured to detect the presence of nearby objects without any physical contact. The sensor component 1214 may also include a light sensor, such as a CMOS or CCD image sensor, for use in imaging applications. In some embodiments, the sensor component 1214 may also include an accelerometer sensor, a gyroscope sensor, a magnetic sensor, a pressure sensor, or a temperature sensor.

The communication component 1216 is configured to facilitate communication, wired or wirelessly, between the device 1200 and other devices. The device 1200 can access a wireless network based on a communication standard, such as WiFi, 2G, or 3G, or a combination thereof. In one exemplary embodiment, the communication component 1216 receives a broadcast signal or broadcast associated information from an external broadcast management system via a broadcast channel. In one exemplary embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1204, executable by the processor 1220 in the device 1200, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. The specification and embodiments are merely considered to be exemplary and the substantive scope of the disclosure is limited only by the appended claims.

It should be understood that the disclosure is not limited to the precise structure as described above and shown in the figures, but can have various modification and alternations without departing from the scope of the disclosure. The scope of the disclosure is limited only by the appended claims.

## Claims

1. A method for switching color gamut mode, **characterized in that** the method comprises:
acquiring (S100, S401, S601) a picture to be displayed;
determining (S101) a picture type to which the picture to be displayed belongs;
acquiring (S102) a current color gamut mode currently adopted by a terminal, each color gamut mode having a picture type with which it matches; and
if the picture type to which the picture to be displayed belongs does not match the current color gamut mode, switching (S103) the current color gamut mode to a color gamut mode which matches the picture type to which the picture to be displayed belongs.

2. The method of claim 1, wherein determining (S101) a picture type to which the picture to be displayed belongs includes:
determining a picture type to which the picture to be displayed belongs according to frequency information of the picture to be displayed.

3. The method of claim 2, wherein determining a picture type to which the picture to be displayed belongs according to frequency information of the picture to be displayed includes:
applying (S402, S602) a Fourier transformation to the picture to be displayed to acquire the frequency information; and
determining (S403, S603) a picture type to which the picture to be displayed belongs according to a relationship between the frequency information and a preset threshold, wherein the picture type includes a natural picture and a composite picture, the proportion of same frequency information in the natural picture is lower than the preset threshold, and the proportion of same frequency information in the composite picture is higher than the preset threshold.

4. The method of any preceding claim, wherein if the picture type to which the picture to be displayed belongs does not match the current color gamut mode, switching the current color gamut mode to a color gamut mode which matches the picture type to which the picture to be displayed belongs includes:
when the picture type to which the picture to be displayed belongs is a natural picture and the current color gamut mode is wide color gamut mode, determining that they do not match with each other and switching the wide color gamut mode to standard Red Green Blue (sRGB) mode which matches the picture type to which the picture to be displayed belongs; or
when the picture type to which the picture to be displayed belongs is a composite picture and the current color gamut mode is sRGB mode, determining that they do not match with each other and switching the sRGB mode to wide color gamut mode which matches the picture type to which the picture to be displayed belongs.

5. The method of claim 4, wherein the method further includes:
after switching the wide color gamut mode to sRGB mode which matches the picture type to which the picture to be displayed belongs, if it is determined that the picture type to which the currently acquired picture to be displayed belongs is a composite picture, switching (S407) the sRGB mode back to the wide color gamut mode.

6. The method of claim 4 or 5, wherein the method further includes:
after switching the sRGB mode to wide color gamut mode which matches the picture type to which the picture to be displayed belongs, if it is determined that the picture type to which the currently acquired picture to be displayed belongs is a natural picture, switching (S607) the wide color gamut mode back to the sRGB mode.

7. A device for switching color gamut mode, **characterized in that** the device comprises:
a picture acquiring module (80) configured to acquire a picture to be displayed;
a determining module (81) configured to determine a picture type to which the picture to be displayed which is acquired by the picture acquiring module belongs;
a mode acquiring module (82) configured to acquire a current color gamut mode currently adopted by a terminal, each color gamut mode having a picture type with which it matches; and
a switching module (83) configured to, if the picture type determined by the determining module to which the picture to be displayed belongs does not match the current color gamut mode acquired by the mode acquiring module, switch the current color gamut mode to a color gamut mode which matches the picture type to which the picture to be displayed belongs.

8. The device of claim 7, wherein the determining module is configured to:
determine a picture type to which the picture to be displayed belongs according to frequency information of the picture to be displayed.

9. The device of claim 8, wherein the determining module (81) includes:
a transforming sub-module (811) configured to apply a Fourier transformation to the picture to be displayed to acquire the frequency information; and
a determining sub-module (812) configured to determine a picture type to which the picture to be displayed belongs according to a relationship between the frequency information acquired by the transforming sub-module and a preset threshold, wherein the picture type includes a natural picture and a composite picture, the proportion of same frequency information in the natural picture is lower than the preset threshold, and the proportion of same frequency information in the composite picture is higher than the preset threshold.

10. The device of any of claims 7 to 9, wherein the switching module (83) includes:
a first switching sub-module (831) configured to, when the picture type to which the picture to be displayed belongs is a natural picture and the current color gamut mode is wide color gamut mode, determine that they do not match with each other and switch the wide color gamut mode to standard Red Green Blue (sRGB) mode which matches the picture type to which the picture to be displayed belongs; or
a second switching sub-module (832) configured to, when the picture type to which the picture to be displayed belongs is a composite picture and the current color gamut mode is sRGB mode, determine that they do not match with each other and switch the sRGB mode to wide color gamut mode which matches the picture type to which the picture to be displayed belongs.

11. The device of claim 10, wherein the switching module (83) further includes:
a third switching sub-module (833) configured to, after the first switching sub-module switches the wide color gamut mode to sRGB mode which matches the picture type to which the picture to be displayed belongs, if it is determined that the picture type to which the currently acquired picture to be displayed belongs is a composite picture, switch the sRGB mode back to the wide color gamut mode.

12. The device of claim 10 or 11, wherein the switching module (83) further includes:
a fourth switching sub-module (834) configured to, after the second switching sub-module switches the sRGB mode to wide color gamut mode which matches the picture type to which the picture to be displayed belongs, if it is determined that the picture type to which the currently acquired picture to be displayed belongs is a natural picture, switch the wide color gamut mode back to the sRGB mode.

13. A device for switching color gamut mode, **characterized in** comprising:
a processor (1202);
a memory (1204) for storing instructions executable by the processor;
wherein the processor (1202) is configured to carry out the method of any of claims 1 to 6.

14. A recording medium readable by a computer and having recorded thereon a computer program including instructions that when executed cause a computing device to carry out the steps of a method for switching color gamut mode according to any one of claims 1 to 6.
